# EUROPÄISCHE PATENTSCHRIFT

(11) **EP 3 077 431 B1**
(45) Veröffentlichungstag und Bekanntmachung des Hinweises auf die Patenterteilung: **31.01.2018**
(21) Anmeldenummer: 14790627.5
(22) Anmeldetag: 30.10.2014
(51) Int. Cl.: C08F 255/10, C09J 151/06, C08L 51/06, C08L 91/00, C09J 191/00

(54) **MEHRPHASIGE POLYMERZUSAMMENSETZUNG**
MULTI-PHASE POLYMER COMPOSITION
COMPOSITION POLYMÈRE MULTIPHASE

(30) Priorität: 03.12.2013 DE 102013224772
(43) Veröffentlichungstag der Anmeldung: 12.10.2016
(73) Patentinhaber: tesa SE, 22848 Norderstedt (DE)
(72) Erfinder: PAPENBROOCK, Marten, 20253 Hamburg (DE); PRENZEL, Alexander, 22529 Hamburg (DE)
(86) Internationale Anmeldenummer: PCT/EP2014/073305
(87) Internationale Veröffentlichungsnummer: WO 2015/082142

(56) Entgegenhaltungen:
- EP-A1- 1 211 269
- EP-A1- 2 479 231
- DE-T2- 69 424 423
- US-A1- 2003 166 767

## Beschreibung

### Technisches Gebiet der Erfindung

Die vorliegende Erfindung betrifft eine mehrphasige Polymerzusammensetzung umfassend ein Kammcopolymer (A) mit einer kontinuierlichen Acrylatphase und einer diskontinuierlichen Kohlenwasserstoffphase sowie wenigstens zwei Kohlenwasserstoffverbindungen (B-1) und (B-2), die in der Kohlenwasserstoffphase des Kammcopolymers (A) löslich sind, sowie, optional, weitere Additive. Die vorliegende Erfindung betrifft ferner Haftklebmassen, umfassend die erfindungsgemäße mehrphasige Polymerzusammensetzung sowie die Verwendung dieser Haftklebmasse zur Verklebung von Gegenständen, insbesondere zur Verklebung von Gegenständen mit unpolaren Oberflächen. Ebenfalls beschrieben wird ein Verfahren zum Herstellen der mehrphasigen Polymerzusammensetzung.

### Allgemeiner Stand der Technik

Haftklebrige Polymerzusammensetzungen auf Basis von Acrylaten sind aus dem Stand der Technik bekannt. Acrylat-basierte Klebmassen sind aufgrund ihrer Chemikalienbeständigkeit besonders für die Verklebung in industriellen Anwendungen geeignet, und die im Stand der Technik beschriebenen Polymerzusammensetzungen finden Anwendung bei der Verklebung verschiedener Substrate. Nachteil der bekannten Zusammensetzungen ist jedoch, dass ihre Anwendung auf Substraten mit Oberflächen niedriger Energie (sogenannte "low surface energy" Materialien, im folgenden auch "LSE"-Materialien) schwierig ist. Dies äußert sich einerseits in der Klebkraft der bekannten Haftklebmassen auf unpolaren Substraten wie Polypropylen oder mit LSE-Lacken beschichtetem Stahl, sowie, andererseits, in der Geschwindigkeit, mit der die maximalen Klebkräfte erzielt werden. Als Hauptursache für die niedrigen Klebkräfte bekannter Acrylatbasierter Haftklebmassen auf unpolaren Oberflächen wird der Unterschied der Oberflächenenergien der bekannten Polymerzusammensetzungen und der LSE-Materialien sowie das Fehlen geeigneter Anknüpfungspunkte innerhalb der LSE-Oberflächen für kovalente oder stark nicht-kovalente Bindungen betrachtet. Die Adhäsion zwischen bekannten, acrylatbasierten Polymerzusammensetzungen und LSE-Oberflächen beruht insofern im Wesentlichen auf schwächeren van-der-Waals-Kräften.

Ein Ansatz zum Ausbilden höherer Klebkräfte zwischen LSE-Oberflächen und Polymerzusammensetzungen auf Basis von Polyacrylaten besteht in der Verwendung von Klebharzen. Ein anderer Ansatz verwendet sogenannte Primer, d.h. Haftvermittler, um die Oberflächenenergie der LSE-Substrate anzuheben. Während der Einsatz von Primern aufwendig ist, führt die Verwendung von Klebharzen zu einer Abnahme der Kohäsion der Polymerzusammensetzung, was zu einem Bruch der Verbindung unter Last führen kann.

US 2010/0266837 A1 offenbart vor diesem Hintergrund Haftklebmassen, umfassend ein Kammcopolymer und eine Kohlenwasserstoffverbindung mit einem Molekulargewicht von wenigstens 1.000 g/mol. Die Ergebnisse dieser im Stand der Technik beschriebenen Haftklebmassen sind jedoch noch immer nicht befriedigend, und es besteht ein grundsätzlicher Bedarf an Haftklebmassen, die gute Klebkräfte auf unpolaren Oberflächen aufweisen, ohne dass Kompromisse hinsichtlich der Kohäsion gemacht werden müssten. Solche Haftklebmassen sollten ferner eine gute Chemikalienbeständigkeit aufweisen und hohe Klebkräfte bereits nach kurzer Zeit ausbilden.

### Aufgabe der vorliegenden Erfindung

Der vorliegenden Erfindung liegt insofern die Aufgabe zugrunde, eine verbesserte Polymerzusammensetzung bereitzustellen.

### Zusammenfassung der vorliegenden Erfindung

Die vorliegende Erfindung adressiert diese Aufgabe und die Probleme des Standes der Technik, indem eine mehrphasige Polymerzusammensetzung bereitgestellt wird, umfassend
- 30-64 Gewichtsteile, bevorzugt 45-60 Gewichtsteile eines Kammcopolymers (A), das erhältlich ist durch Polymerisation eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet;
- 36-70 Gewichtsteile, bevorzugt 40-55 Gewichtsteile wenigstens zweier in der Kohlenwasserstoffphase Kw des Kammcopolymers (A) löslicher Kohlenwasserstoffverbindungen (B-1) und (B-2);
- sowie, optional, bis zu 20 Gewichtsteile, bevorzugt 0-5 Gewichtsteile weiterer Additive, bezogen auf 100 Gewichtsteile der Polymerzusammensetzung,
wobei das Comonomerengemisch umfasst: 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode (Messmethode A2), von mehr als 40 °C, bevorzugt mehr als 80 °C aufweisen; und 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus Monomeren, deren Homopolymere eine statische Glasübergangstemperatur (Tg), gemessen nach der DSC Methode (Messmethode A2), von 40 °C oder weniger, bevorzugt 25 °C oder weniger aufweisen, vorzugsweise ausgewählt aus (Meth-)Acrylatcomonomeren mit einem C1-C18 Alkylrest in der Estergruppe, bevorzugt Butylacrylat, Amylacrylat, 2-Ethylhexylacrylat, Isooctylacrylat und Decylacrylat; und

wobei die wenigstens zwei Kohlenwasserstoffverbindungen ein Kohlenwasserstoffharz (B-1) mit einem Erweichungspunkt von mindestens 70°C und ein Kohlenwasserstoffharz (B-2) mit einem Erweichungspunkt von höchstens 20°C umfassen.

Die vorliegende Erfindung betrifft ferner Verfahren zum Herstellen der mehrphasigen Polymerzusammensetzung, umfassend die Schritte
- Polymerisieren eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer AcrylatHauptkette und Kohlenwasserstoff-Seitenketten, wobei das Comonomerengemisch umfasst:
   ▪ 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode (Messmethode A2), von mehr als 40 °C, bevorzugt mehr als 80 °C aufweisen; und
   ▪ 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus Monomeren, deren Homopolymere eine statische Glasübergangstemperatur (Tg), gemessen nach der DSC Methode (Messmethode A2), von 40 °C oder weniger, bevorzugt 25 °C oder weniger aufweisen, vorzugsweise ausgewählt aus (Meth-)Acrylatcomonomeren mit einem C1-C18 Alkylrest in der Estergruppe, bevorzugt Butylacrylat, Amylacrylat, 2-Ethylhexylacrylat, Isooctylacrylat und Decylacrylat;
- Mischen von 30-64 Gewichtsteilen des so erhaltenen Kammcopolymers (A) mit 36-70 Gewichtsteilen, bezogen auf 100 Gewichtsteile der Polymerzusammensetzung, wenigstens zweier Kohlenwasserstoffverbindungen (B-1) und (B-2), die mit den Kohlenwasserstoffseitenketten des Kammcopolymers (A) kompatibel sind, wobei(B-1) ein Kohlenwasserstoffharz mit einem Erweichungspunkt von mindestens 70°C und (B-2) ein Kohlenwasserstoffharz mit einem Erweichungspunkt von höchstens 20°C ist;
- ggf. Mischen mit weiteren Additiven;
- sowie, optional, das Vernetzen reaktiver, funktioneller Gruppen.

Das hierin beschriebene Kammcopolymer (A) bildet eine kontinuierliche Acrylatphase und eine diskontinuierliche Kohlenwasserstoffphase Kw aus, sobald eine Vielzahl von Polymerketten einzelner Kammcopolymer-Moleküle miteinander in Kontakt kommen, beispielsweise nach Entfernen eines Lösungsmittels. Hierbei assoziieren sich die Acrylat-Hauptketten und die Kohlenwasserstoff-Seitenketten derart, dass eine kontinuierliche Acrylatphase und eine diskontinuierliche Kohlenwasserstoffphase entstehen.

Die erfindungsgemäßen, mehrphasigen Polymerzusammensetzungen weisen wenigstens zwei Phasen, nämlich wenigstens eine Kohlenwasserstoff-Phase Kw1 und eine Acrylatphase auf. Dass diese Phasen vorliegen, ergibt sich aus der Bestimmung der statischen Glasübergangstemperaturen der Polymerzusammensetzung mittels DSC. Alternativ hierzu oder ergänzend kann das Vorliegen der unterschiedlichen Phasen mittels Dynamisch Mechanischer Analyse (DMA) (Messmethode A3) nachgewiesen werden. Hierbei werden in einer sogenannten temperature sweep-Messung zwei oder mehrere Glasübergänge gemessen, die sich aus den einzelnen Bestandteilen der Zusammensetzung ergeben. Aufgrund der besonderen Kombination des Kammcopolymers (A) und der Kohlenwasserstoffverbindungen (B-1) und (B-2) in den genannten Verhältnissen ist die Zusammensetzung trotz der unterschiedlichen Phasen stabil, das heißt es kommt zu keiner makroskopischen Phasentrennung in das Kammcopolymer (A) einerseits und die Kohlenwasserstoffverbindungen (B-1) und (B-2) andererseits.

Die erfindungsgemäßen mehrphasigen Polymerzusammensetzungen haben sich als besonders geeignet bei der Verklebung von Gegenständen mit LSE-Oberflächen erwiesen. Sie sind ferner chemikalien- und UV-beständig und zeigen sowohl bei Raumtemperatur (25°C) als auch bei hohen Temperaturen eine hohe Kohäsion, was sich in hohen Scherfestigkeiten äußert. Überraschender Weise gewährleisten die Polymerzusammensetzungen trotzdem ein schnelles Auffließen auf Oberflächen von Gegenständen niedriger Energie und mit LSE-Lacken beschichteten Oberflächen sowie auf anderen LSE-Materialien, was die Ausbildung hoher Klebkräfte nach kurzer Zeit ermöglicht. Die erfindungsgemäßen mehrphasigen Polymerzusammensetzungen erlauben ferner die Bereitstellung transparenter Haftklebmassen. In einem weiteren Aspekt betrifft die vorliegende Erfindung insofern Haftklebmassen, bevorzugt transparente Haftklebmassen, umfassend die hierin beschriebene mehrphasige Polymerzusammensetzung. Ferner wird die Verwendung der Haftklebmasse zur Verklebung von Gegenständen, insbesondere zur Verklebung von Gegenständen mit niedrigen Oberflächenenergien (LSE-Materialien) beschrieben. Unter solchen LSE-Materialien werden im Sinne der vorliegenden Erfindung auch Materialien verstanden, die eigentlich keine LSE-Materialien darstellen, deren Oberflächen sich jedoch gegenüber Klebmassen aufgrund einer Beschichtung, z.B. mit einer Schicht eines LSE-Lackes, wie LSE-Materialien verhalten.

### Detaillierte Beschreibung der Erfindung

Erfindungsgemäß wird die oben beschriebene Aufgabe gelöst durch eine mehrphasige Polymerzusammensetzung, umfassend
- 30-64 Gewichtsteile, bevorzugt 45-60 Gewichtsteile eines Kammcopolymers (A), das erhältlich ist durch Polymerisation eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet;
- 36-70 Gewichtsteile, bevorzugt 40-55 Gewichtsteile wenigstens zweier in der Kohlenwasserstoffphase Kw des Kammcopolymers (A) löslicher Kohlenwasserstoffverbindungen (B-1) und (B-2);
- sowie, optional, bis zu 20 Gewichtsteile, bevorzugt 0-5 Gewichtsteile weiterer Additive, bezogen auf 100 Gewichtsteile der Polymerzusammensetzung,
wobei das Comonomerengemisch umfasst: 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode (Messmethode A2), von mehr als 40 °C, bevorzugt mehr als 80 °C aufweisen; und 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus Monomeren, deren Homopolymere eine statische Glasübergangstemperatur (Tg), gemessen nach der DSC Methode (Messmethode A2), von 40 °C oder weniger, bevorzugt 25 °C oder weniger aufweisen, vorzugsweise ausgewählt aus (Meth-)Acrylatcomonomeren mit einem C1-C18 Alkylrest in der Estergruppe, bevorzugt Butylacrylat, Amylacrylat, 2-Ethylhexylacrylat, Isooctylacrylat und Decylacrylat; und

wobei die wenigstens zwei Kohlenwasserstoffverbindungen ein Kohlenwasserstoffharz (B-1) mit einem Erweichungspunkt von mindestens 70°C und ein Kohlenwasserstoffharz (B-2) mit einem Erweichungspunkt von höchstens 20°C umfassen.

In einer bevorzugten Ausführungsform ist die hierin beschriebene Polymerzusammensetzung dadurch gekennzeichnet, dass das Kammcopolymer (A) durch Polymerisation aus einer Mischung umfassend 50-99 Gewichtsprozent des Comonomerengemisches sowie 1-50 Gewichtsprozent des Makromers, bevorzugt 75-95 Gewichtsprozent des Comonomerengemisches sowie 5-25 Gewichtsprozent des Makromers, besonders bevorzugt 85-90 Gewichtsprozent des Comonomerengemisches sowie 10-15 Gewichtsprozent des Makromers, bezogen auf das Gesamtgewicht des Comonomerengemisches und des wenigstens einen Makromers, erhältlich ist.

In einer weiteren Ausführungsform der Erfindung enthält die Polymerzusammensetzung zusätzlich eine Kohlenwasserstoffverbindung (C), deren zahlenmittleres Molekulargewicht (Mn) mehr als 1.000 g/mol beträgt. In einer weiteren Ausführungsform enthält die Polymerzusammensetzung wenigstens ein Additiv, ausgewählt aus der Gruppe bestehend aus Weichmachern, Ölen und in der Acrylatphase des Kammcopolymers (A) löslichen Harzen, bevorzugt Kolophoniumestern und/oder Terpenphenolharzen.

In einem zweiten Aspekt betrifft die vorliegende Erfindung Verfahren zur Herstellung einer mehrphasigen Polymerzusammensetzung gemäß einem der vorhergehenden Ansprüche, umfassend die Schritte
- Polymerisieren eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer AcrylatHauptkette und Kohlenwasserstoff-Seitenketten, wobei das Comonomerengemisch umfasst:
   ▪ 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode (Messmethode A2), von mehr als 40 °C, bevorzugt mehr als 80 °C aufweisen; und
   ▪ 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus Monomeren, deren Homopolymere eine statische Glasübergangstemperatur (Tg), gemessen nach der DSC Methode (Messmethode A2), von 40 °C oder weniger, bevorzugt 25 °C oder weniger aufweisen, vorzugsweise ausgewählt aus (Meth-)Acrylatcomonomeren mit einem C1-C18 Alkylrest in der Estergruppe, bevorzugt Butylacrylat, Amylacrylat, 2-Ethylhexylacrylat, Isooctylacrylat und Decylacrylat;
- Mischen von 30-64 Gewichtsteilen des so erhaltenen Kammcopolymers (A) mit 36-70 Gewichtsteilen, bezogen auf 100 Gewichtsteile der Polymerzusammensetzung, wenigstens zweier Kohlenwasserstoffverbindungen (B-1) und (B-2), die mit den Kohlenwasserstoffseitenketten des Kammcopolymers (A) kompatibel sind, wobei(B-1) ein Kohlenwasserstoffharz mit einem Erweichungspunkt von mindestens 70°C und (B-2) ein Kohlenwasserstoffharz mit einem Erweichungspunkt von höchstens 20°C ist;
- ggf. Mischen mit weiteren Additiven;
- sowie, optional, das Vernetzen reaktiver, funktioneller Gruppen.

Ferner betrifft die vorliegende Erfindung Haftklebmassen, umfassend eine mehrphasige Polymerzusammensetzung wie hierin beschrieben, sowie die Verwendung der Haftklebmasse zur Verklebung von Gegenständen, insbesondere von Gegenständen mit Oberflächen, die eine niedrige Oberflächenenergie aufweisen (LSE-Materialien).

Nachfolgend werden die Komponenten der erfindungsgemäßen Polymerzusammensetzung und der Haftklebmasse, umfassend die Polymerzusammensetzung näher beschrieben.

### Kammcopolymer (A)

Als Kammcopolymere (engl. comb-type graftcopolymer) werden Polymere bezeichnet, für deren Aufbau charakteristisch ist, dass sie an ihrer Hauptkette (Polymerrückgrat) Seitenketten tragen, die aufgrund ihrer Länge bereits für sich als Polymer angesehen werden könnten.

Wie hierin verwendet, soll das Kammcopolymer (A) für ein Copolymer stehen, dass insbesondere durch freie radikalische Polymerisation eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren erhältlich ist.

### Comonomerengemisch

Das Comonomerengemisch, das - wie hierin beschrieben - durch Polymerisation in Gegenwart des wenigstens einen Makromers zu dem Kammcopolymer (A) polymerisiert wird, umfasst 2-7, bevorzugt 2-6, noch bevorzugter 3-5 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren (sogenannten hoch-Tg-) Monomeren, deren Homopolymere eine statische Glasübergangstemperatur (Tg), gemessen nach der DSC Methode (Messmethode A2), von mehr als 40 °C, bevorzugt mehr als 80 °C aufweisen. Das Comonomerengemisch umfasst ferner 43-97, bevorzugt 70-95, besonders bevorzugt 80-87 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus (sogenannten niedrig-Tg-) Monomeren, deren Homopolymere eine statische Glasübergangstemperatur (Tg), gemessen nach der DSC Methode (Messmethode A2), von 40 °C oder weniger, bevorzugt 25 °C oder weniger aufweisen, vorzugsweise ausgewählt aus (Meth-)Acrylatcomonomeren mit einem C1-C18 Alkylrest in der Estergruppe, bevorzugt Butylacrylat, Amylacrylat, 2-Ethylhexylacrylat, Isooctylacrylat und Decylacrylat. In einer bevorzugten Ausführungsform der Erfindung umfasst das Comonomerengemisch 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure und Maleinsäureanhydrid sowie 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus (Meth-)Acrylatcomonomeren mit einem C1-C18 Alkylrest in der Estergruppe, bevorzugt Butylacrylat, Amylacrylat, 2-Ethylhexylacrylat, Isooctylacrylat und Decylacrylat.

Mit anderen Worten besteht das Comonomerengemisch aus wenigstens drei Comonomeren von denen eines ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode, von mehr als 40 °C, bevorzugt mehr als 80 °C aufweisen (im Folgenden auch als "hoch-Tg-Comonomer" bezeichnet). Der Ausdruck "hoch-Tg-Monomer" orientiert sich an der statischen Glasübergangstemperatur der Homopolymere, wie in J. Brandrup, E.H. Immergut, E.A. Grulke, Polymer Handbook, 4th Edition, 1998, beschrieben. Bevorzugt enthält das Comonomerengemisch lediglich eines dieser hoch-Tg-Comonomere, besonders bevorzugt Acrylsäure oder Methacrylsäure, bevorzugt Acrylsäure. Erfindungsgemäß wird dieses hoch-Tg-Comonomer in einer Menge von 2-7 Gewichtsprozent, bezogen auf das Gesamtgewicht des Comonomerengemisches und des wenigstens einen Makromers, verwendet, bevorzugt in einer Menge von 2-6, besonders bevorzugt in einer Menge von 3-5 Gewichtsprozent.

Die wenigstens zwei (Meth-)Acrylatcomonomere, die Bestandteil des hierin beschriebenen Comonomerengemisches sind, werden ausgewählt aus der Gruppe bestehend aus Monomeren, deren Homopolymer eine statische Glasübergangstemperatur (Tg), gemessen nach der DSC Methode von 40°C oder weniger, bevorzugt 25°C oder weniger aufweisen (im folgenden auch als "niedrig-Tg-Comonomere" bezeichnet). Der Ausdruck "niedrig-Tg-Monomer" orientiert sich an der statischen Glasübergangstemperatur der Homopolymere, wie in J. Brandrup, E.H. Immergut, E.A. Grulke, Polymer Handbook, 4th Edition, 1998, beschrieben. Die wenigstens zwei (Meth-)Acrylatcomonomere sind bevorzugt ausgewählt aus (Meth-)Acrylatcomonomeren mit einem C1-C18 Alkylrest in der Estergruppe, bevorzugt mit einem C4-C10 Alkylrest in der Estergruppe. Bevorzugte Beispiele dieser niedrig-Tg-Comonomere sind Butylacrylat, Amylacrylat, 2-Ethylhexylacrylat, Isooctylacrylat und Decylacrylat sowie Isomere hiervon. Besonders bevorzugt werden Butylacrylat, 2-Ethylhexylacrylat, Isooctylacrylat und/oder Decylacrylat verwendet. Besonders bevorzugt wird wenigstens eines der mindestens zwei (Meth-)Acrylatcomonomere ausgewählt aus Monomeren, deren Homopolymer eine statische Glasübergangstemperatur (Tg) von 0°C oder weniger aufweisen. Dieses wenigstens eine der mindestens zwei (Meth-)Acrylatcomonomere ist bevorzugt Butylacrylat, 2-Ethylhexylacrylat, Isooctylacrylat oder Decylacrylat.

In einer weiteren Ausführungsform umfasst das Comonomerengemisch zusätzlich bis zu 20 Gewichtsprozent, bevorzugt bis zu 15 Gewichtsprozent (bezogen auf das Gesamtgewicht des Comonomerengemisches und des wenigstens einen Makromers) wenigstens eines weiteren copolymerisierbaren Monomers, ausgewählt aus der Gruppe bestehend aus Isobornylacrylat, Stearylacrylat, Isostearylacrylat, Hydroxyethylacrylat, Hydroxyethylmethacrylat, 4-Hydroxybutylacrylat, Vinylacetat, Vinylbutyrat, Vinylpropionat, Vinylisobutyrat, Vinylvalerat, Vinylversatat, N-Vinylpyrollidon und N-Vinylcaprolactam, bevorzugt ausgewählt aus Isobornylacrylat, Stearylacrylat, Isostearylacrylat, Vinylacetat, Vinylbutyrat, Vinylpropionat, Vinylisobutyrat, Vinylvalerat, Vinylversatat, N-Vinylpyrollidon und N-Vinylcaprolactam.

In einer besonders bevorzugten Ausführungsform enthält das Comonomerengemisch keine Hydroxyalkyl(meth)acrylate. Die Erfinder gehen davon aus, dass Comonomerengemische, die keine Hydroxyalkyl(meth)acrylate enthalten, besonders geeignet für die Bereitstellung vorteilhafter Kammcopolymere (A) sind.

Bevorzugt werden die einzelnen Comonomere des Comonomerengemisches so ausgewählt, dass das Polyacrylatrückgrat (auch als "Acrylatrückgrat", "Polyacrylathauptkette", "Acrylathauptkette" oder "Hauptkette" bezeichnet), d.h. die kontinuierliche Acrylatphase des Kammcopolymers (A) eine statische Glasübergangstemperatur (gemessen nach der DSC Methode) von weniger als -10°C, bevorzugt von -60°C bis -20°C aufweist.

Besonders bevorzugte Comonomerengemische enthalten Acrylsäure, Butylacrylat, 2-Ethylhexylacrylat und Isobornylacrylat, besonders bevorzugt Acrylsäure, Butylacrylat und 2-Ethylhexylacrylat.

Beispielhafte, bevorzugte Comonomerengemische bestehen aus 3-7 Gewichtsprozent Acrylsäure, 45-65 Gewichtsprozent Butylacrylat, 20-27 Gewichtsprozent 2-Ethylhexylacrylat und bis zu 15 Gewichtsprozent Isobornylacrylat, wobei sich die Angaben in Gewichtsprozent auf das Gesamtgewicht des Comonomerengemisches und des wenigstens einen Makromers beziehen.

### Makromer

Das Comonomerengemisch wird in Gegenwart wenigstens eines Makromers unter Ausbildung eines Kammcopolymers (A) polymerisiert. Makromere sind relativ niedermolekulare Polymere mit einer reaktiven, copolymerisierbaren funktionellen Gruppe an einem oder mehreren Enden des Polymers. Das wenigstens eine Makromer ist ausgewählt aus der Gruppe bestehend aus polymerisierbaren Ethylen-Butylen-, Ethylen-Propylen-, Ethylen-Butylen-Propylen- und Isobutylen-Makromeren. Die Makromerhauptketten dieser Ethylen-Butylen-, Ethylen-Propylen-, Ethylen-Butylen-Propylen- und Isobutylen-Makromere sind bevorzugt vollständig hydriert. Sie sind erhältlich mittels anionischer Polymerisation der entsprechenden Monomere. Ein bekanntes Verfahren umfasst beispielsweise eine anionische Polymerisation zur Herstellung Hydroxyl-terminierter, konjugierter Dienpolymere aus Monomeren wie 1,3-Butadien und/oder Isopren. Geeignete kautschukartige Monoole wie das Kraton® L 1203 werden von der Firma Kraton Polymers Company angeboten. In einem anschließenden Schritt kann die terminale Hydroxyfunktion zu einer Acryloyl- oder Methacrylolfunktionalität umgesetzt werden.

Das Makromer weist erfindungsgemäß ein Molekulargewicht von bevorzugt 2.000 bis etwa 30.000 g/mol, besonders bevorzugt 2.000 bis 10.000 g/mol auf (gemessen mittels Gelpermeationschromatographie (GPC), Polysytrol als Standard, Messmethode A1) auf. In einer bevorzugten Ausführungsform der Erfindung hat das Makromer eine Glasübergangstemperatur, gemessen nach der DSC-Methode, von -30°C oder weniger, bevorzugt von -70°C bis -50°C. Entsprechende Makromere sind kommerziell erhältlich, z.B. von der Firma Kuraray Co., Ltd. Ein bevorzugtes Makromer ist L-1253 der Firma Kuraray Co., Ltd. Makromere, wie hierin verwendet, sind relativ niedermolekulare Polymere mit einerfunktionellen, copolymerisierbaren reaktiven Gruppe, insbesondere einer Acrylat-oder Methacrylat-funktionellen Gruppe an einem oder mehreren Enden des Polymers.

Durch Polymerisation, vorzugsweise durch freie radikalische Polymerisation des Comonomerengemisches in Gegenwart des wenigstens einen Makromers entsteht das Kammcopolymer (A). Bei dem Kammcopolymer (A) handelt es sich um ein kammartiges Copolymer, das mitunter auch als "Pfropfcopolymer" bezeichnet wird. Die Bezeichnung "Pfropfcopolymer" ist hierbei jedoch insofern missverständlich, weil sich das Kammcopolymer vorliegend durch Polymerisation der Comonomere des Comonomerengemisches in Gegenwart der Makromermoleküle bilden lässt. Statt durch Pfropfcopolymerisation, bei der ein bereits bestehendes Polymerrückgrat als Anknüpfungspunkt für Ketten weiterer Monomere dient, werden die Seitenketten des Kammcopolymers (A), wie hierein verwendet, also bevorzugt während der Polymerisation der Comonomere mit den copolymerisierbaren reaktiven Gruppen des Makromers, bevorzugt mit den Acrylat- oder Methacrylat-funktionellen Gruppen des Makromers, über die Makromerketten eingeführt. Die copolymerisierbaren reaktiven Gruppen des Makromers werden insofern bereits während der Polymerisation des Comonomerengemisches in das Polyacrylatrückgrat (Hauptkette) eingebaut. Die Ethylen-Butylen-, Ethylen-Propylen-, Ethylen-Butylen-Propylen- und/oder Isobutylen-Ketten des Makromers bilden die Seitenketten des Kammcopolymers (A) (hierin auch als Kohlenwasserstoff-Seitenketten des Kammcopolymers (A) bezeichnet). Aufgrund seiner Struktur wird das Kammcopolymer (A) auch als "Flaschenbürstenpolymer" (engl.: bottle brush polymer) bezeichnet. In der erfindungsgemäßen Polymerzusammensetzung führt diese Struktur und der lipophile Charakter der Kohlenwasserstoffseitenketten zur Ausbildung einer kontinuierlichen Acrylatphase und einer diskontinuierlichen Kohlenwasserstoffphase Kw des Kammcopolymers (A). Die Kohlenwasserstoffphase Kw liegt bevorzugt mikrophasensepariert vor. Es wird vermutet, dass das phasenseparierte, bevorzugt mikrophasenseparierte Kammcopolymer (A) aufgrund der Ausbildung der kontinuierlichen Acrylatphase und der diskontinuierlichen Kohlenwasserstoffphase Kw unterschiedliche Materialeigenschaften, nämlich einen kautschukartigen, d.h. vorliegend einen hydrophoben, thermoplastischen Charakter der Seitenketten und die inhärent haftklebrigen Eigenschaften des Polyacrylatrückgrates miteinander vereint.

Der Anteil des wenigstens einen Makromers beträgt bevorzugt 1 bis 50 Gewichtsprozent, stärker bevorzugt 5 bis 25 Gewichtsprozent, und besonders bevorzugt 10 bis 15 Gewichtsprozent, bezogen auf das Gesamtgewicht aus Comonomerengemisch und dem wenigstens einen Makromer.

In einer weiteren bevorzugten Ausführungsform wird die Polymerisation des Comonomerengemisches in Gegenwart wenigstens eines weiteren, nicht-polyolefinischen Makromers durchgeführt. Dieses zusätzliche, nicht-polyolefinische Makromer ist bevorzugt ausgewählt aus der Gruppe der Polymethylacrylate, der Polystyrole, der Polydimethylsiloxane, der Polyethylenoxide und der Polypropylenoxide. Auch bei diesen weiteren nicht-polyolefinischen Makromeren handelt es sich um copolymerisierbare Makromere. Mit anderen Worten weisen auch diese nicht-polyolefinischen Makromere bevorzugt eine funktionelle Acrylat- oder Methacrylatgruppe am Ende der Polymerkette des Makromers auf. In einer Ausführungsform der Erfindung beträgt der Anteil des wenigstens einen weiteren, nicht-polyolefinischen Makromers bis zu 20, bevorzugt bis zu 10, besonders bevorzugt bis zu 5 Gewichtsprozent, bezogen auf das Gesamtgewicht aus dem Comonomerengemisch und den Makromeren.

### Kohlenwasserstoffverbindungen (B-1) und (B-2)

Die mehrphasige Polymerzusammensetzung umfasst wenigstens zwei Kohlenwasserstoffverbindungen (B-1) und (B-2), die in der Kohlenwasserstoffphase des Kammcopolymers (A) löslich sind. Der Ausdruck "löslich" bedeutet in diesem Zusammenhang, dass die Kohlenwasserstoffverbindungen (B-1) und (B-2) mit den Kohlenwasserstoffseitenketten des Kammcopolymers (A) kompatibel sind, sodass sich innerhalb der Polymerzusammensetzung eine gemeinsame Kohlenwasserstoffphase Kw1 ausbildet, die aus den Kohlenwasserstoffseitenketten des Kammcopolymers (A) und den Kohlenwasserstoffverbindungen (B-1) und (B-2) besteht. Das Vorliegen dieser gemeinsamen Kohlenwasserstoffphase kann mittels DSC Methode nachgewiesen werden: Sofern sich die Zusammensetzung bestehend aus Kammcopolymer (A) und Kohlenwasserstoffverbindungen (B-1) und (B-2) bei der DSC Messung lediglich hinsichtlich der Beträge der statischen Glasübergangstemperaturen von dem Kammcopolymer (A) vor der Zugabe der Verbindungen (B-1) und (B-2) unterscheidet, liegt keine zusätzliche Phase vor, die im Sinne einer zusätzlichen statischen Glasübergangstemperatur hätte ermittelt werden können. Die Kohlenwasserstoffphase Kw1 der Polymerzusammensetzung wird vielmehr über ihre statische Glasübergangstemperatur, Tg(Kw1), charakterisiert. Entsprechend ist auch die Acrylatphase innerhalb der Polymerzusammensetzung, zu der das Acrylatrückgrat des Kammcopolymers (A) beiträgt, mittels DSC hinsichtlich ihrer Glasübergangstemperatur (Tg(Ac)) bestimmbar.

Bei der Kohlenwasserstoffverbindung (B-1) handelt es sich um ein Kohlenwasserstoffharz mit einem Erweichungspunkt von mindestens 70°C, bevorzugt 70 bis 150 °C, besonders bevorzugt 80 bis 120 °C. Die Kohlenwasserverbindung (B-2) ist ein Kohlenwasserstoffharz mit einem Erweichungspunkt von höchstens 20°C. Die jeweiligen Erweichungspunkte der Kohlenwasserstoffharze (B-1) und (B-2) sind Ring- und Ball-Erweichungspunkte (gemessen nach ASTM E28-99). Das Kohlenwasserstoffharz (B-1) mit einem Erweichungspunkt von mindestens 70°C wird im Folgenden auch als "Festharz" bezeichnet. Das Kohlenwasserstoffharz (B-2) mit einem Erweichungspunkt von höchstens 20°C wird im Folgenden auch als "Weichharz" bezeichnet.

In einer bevorzugten Ausführungsform weist das Kohlenwasserstoffharz (B-1) und/oder das Kohlenwasserstoffharz (B-2) ein zahlenmittleres Molekulargewicht (Mn) (bestimmt mittels GPC, Methode A1) von 1.000 g/mol oder weniger auf. Die Kohlenwasserstoffharze (B-1) und (B-2) liegen bevorzugt in einem Gewichtsverhältnis, (B-1) : (B-2), von 41:59 bis 70:30 vor. In einer besonders bevorzugten Ausführungsform der Erfindung liegt der Anteil an Kohlenwasserstoffharz (B-1) mit einem Erweichungspunkt von mindestens 70°C zwischen 41 und 70 Gewichtsprozent, besonders bevorzugt zwischen 50 und 60 Gewichtsprozent bezogen auf die Gesamtmenge aller Kohlenwasserstoffharze der mehrphasigen Polymerzusammensetzung.

Geeignete Festharze sind Erdöl-basierte synthetische Kohlenwasserstoffe. Beispiele umfassen Harze basierend auf aliphatischen Olefinen. Entsprechende Harze sind erhältlich von Cray Valley unter der Bezeichnung Wingtack® 95, von Exxon unter dem Handelsnamen Escorez®, von Arakawa Chemical unter dem Handelsnamen Arkon® (P-Reihe), von Hercules Speciality Chemicals unter dem Handelsnamen Regalrez® (1030-, 2000-, 5000-Serie) und unter der Bezeichnung Regalite® (R-Reihe), und von Yasuhara Yushi Kogyo Company unter dem Handelsnamen Clearon®.

Geeignete Weichharze sind das C5-Harz Wingtack® 10 von Cray Valley, das Polyterpenharz Dercolyte® LTG sowie die vollhydrierten Kohlenwasserstoffharze Regalite® 1010 und Piccotac® 1020.

In einer weiteren Ausführungsform der Erfindung beträgt der Anteil der wenigstens zwei in der Kohlenwasserstoffphase des Kammcopolymers (A) löslichen Kohlenwasserstoffverbindungen (B-1) und (B-2) an der Kohlenwasserstoffphase der Polymerzusammensetzung, deren Tg, Tg(Kw1), mittels DSC bestimmbar ist, mindestens 80 Gewichtsprozent bezogen auf den Gewichtsanteil der Kohlenwasserstoffphase an der Polymerzusammensetzung, d.h. bezogen auf die Menge an Kohlenwasserstoffseitenketten des Kammcopolymers (A) und der Kohlenwasserstoffharze (B-1) und (B-2).

Es hat sich überraschend herausgestellt, dass sich die Kohlenwasserstoffharze (B-1) und (B-2) zur Bereitstellung besonders vorteilhafter Polymerzusammensetzungen eignen, wenn die Kohlenwasserstoffverbindungen (B-1) und (B-2) in einem Anteil von 36 bis 70 Gewichtsteilen, bevorzugt 40 bis 45 Gewichtsteilen, bezogen auf 100 Gewichtsteile der Polymerzusammensetzung, vorliegen. Im Falle hoher Anteile der Kohlenwasserstoffverbindung (B-2) an der Polymerzusammensetzung kann es zur Ausbildung einer zusätzlichen Kohlenwasserstoffphase innerhalb der Acrylatphase kommen. Eine mögliche Erklärung hierfür ist, dass das Weichharz (B-2) in einer Menge zugegeben wird, die die Löslichkeitsgrenze der Kohlenwasserstoffverbindung (B-2) innerhalb der Kohlenwasserstoffphase des Kammcopolymers (A) übersteigt. Diese zusätzliche Kohlenwasserstoffphase kann beispielsweise mittels dynamisch mechanischer Analyse (DMA) (Messmethode A3) nachgewiesen werden.

### Additive und Klebharze

Neben dem Kammcopolymer (A) und den Kohlenwasserstoffverbindungen (B-1) und (B-2) kann die Polymerzusammensetzung wenigstens ein Additiv und/oder Klebharz enthalten. Additive wie hierin verwendet umfassen
Weichmacher, Öle und in der Acrylatphase des Kammcopolymers (A) lösliche Harze, bevorzugt Kolophoniumester und/oder Terpenphenolharze. Bevorzugte Kolophoniumester sind hydrierte Kolophoniumester. Bevorzugte Terpenphenolharze sind alterungsbeständige Terpenphenolharze.

Ebenfalls möglich ist die Zugabe eines oder mehrerer - von den Kohlenwasserstoffverbindungen (B-1) und (B-2) verschiedener - Klebharze. Die Additive und Klebharze liegen, sofern vorhanden, bevorzugt in einer Menge von bis zu 20 Gewichtsteilen, bevorzugt von bis zu 5 Gewichtsteilen, bezogen auf 100 Gewichtsteile der Polymerzusammensetzung vor.

In einer weiteren, bevorzugten Ausführungsform enthält die Polymerzusammensetzung eine zusätzliche Kohlenwasserstoffverbindung (C), deren zahlenmittleres Molekulargewicht (Mn) mehr als 1.000 g/mol beträgt. Bevorzugt handelt es sich bei dieser zusätzlichen Kohlenwasserstoffverbindung (C) um ein weiteres Weichharz. In einer besonderen Ausführungsform der Erfindung bildet die Kohlenwasserstoffverbindung (C) eine diskontinuierliche Phase innerhalb der Acrylatphase der Polymerzusammensetzung. Mit anderen Worten liegen in dieser besonderen Ausführungsform zwei unterschiedliche diskontinuierliche Phasen innerhalb der kontinuierlichen Phase der Polymerzusammensetzung vor. Gemäß dieser Ausführungsform liegt die statische Glasübergangstemperatur dieser zusätzlichen Phase innerhalb der Polymerzusammensetzung, Tg (C), zwischen den Glasübergangstemperaturen Tg(Kw1) und Tg(Ac) der Polymerzusammensetzung.

Weiterhin können Alterungsschutzmittel, Lichtschutzmittel und Ozonschutzmittel als Additive verwendet werden. Als Alterungsschutzmittel können Irganox® Typen der Fa. BASF bzw. Hostanox® der Firma Clariant, bevorzugt primäre, z.B. 4-Methoxyphenol oder Irganox® 1076, und sekundäre Alterungsschutzmittel, z.B. Irgafos® TNPP oder Irgafos® 168 der Fa. BASF, auch in Kombination miteinander eingesetzt werden. Weitere geeignete Alterungsschutzmittel sind Phenothiazin (C-Radikalfänger) sowie Hydrochinonmethylether in Gegenwart von Sauerstoff sowie Sauerstoff selbst. Als Lichtschutzmittel können UV-Absorber (Cyasorb®-serie) oder sterisch gehinderte Amine (Tinuvin®-Serie) verwendet werden.

### Verfahren zur Herstellung der mehrphasigen Polymerzusammensetzungen

Die erfindungsgemäßen Polymerzusammensetzungen können hergestellt werden, indem zunächst das hierin beschriebene Comonomerengemisch in Gegenwart des wenigstens einen Makromers, ausgewählt aus der Gruppe bestehend aus polymerisierbaren Ethylen-Butylen-, Ethylen-Propylen-, Ethylen-Butylen-Propylen- und Isobutylen-Makromeren unter Ausbildung des Kammcopolymers (A) polymerisiert wird. Das Kammcopolymer (A) kann hierbei durch herkömmliche dem Fachmann geläufige Polymerisationstechniken hergestellt werden. Diese Verfahren umfassen Lösungspolymerisations-, Suspensionspolymerisations-, Emulsionspolymerisations- und Substanzpolymerisationsverfahren. Bevorzugt werden die Kammcopolymere (A) in Lösung mittels freier radikalischer Polymerisation hergestellt. Bevorzugte Lösungsmittel und Lösungsmittelgemische gewährleisten eine ausreichende Löslichkeit der Makromere und sind Ethylacetat, Aceton, Methylisopropylketon, Hexan und/oder Heptan sowie Toluol und Mischungen der sogenannten Lösungsmittel. In einer bevorzugten Ausführungsform der Erfindung wird nach der Polymerisation der Restmonomergehalt unter Verwendung bekannter Verfahren aus dem Stand der Technik reduziert.

Das Acrylatrückgrat und die Kohlenwasserstoffseitenketten des Kammcopolymers liegen nach Entfernen des Lösungsmittels (sofern vorhanden) in Form einer phasenseparierten, bevorzugt mikrophasenseparierten Struktur vor, bei der die Kohlenwasserstoffphase Kw1, die aus den Kohlenwasserstoffseitenketten des Kammcopolymers (A) und den in dieser Kohlenwasserstoffphase löslichen Kohlenwasserstoffverbindungen (B-1) und (B-2) gebildet wird, diskontinuierlich in der kontinuierlichen Acrylatphase der Polymerzusammensetzung vorliegt. Kontinuierlich bedeutet in diesem Zusammenhang, dass die Acrylatphase die einzelnen Abschnitte der diskontinuierlichen Kohlenwasserstoffphase (auch Domänen genannt) wie eine Matrix umhüllt. Das Vorliegen einer mikrophasenseparierten Struktur äußert sich in Form eines transparenten Erscheinungsbildes der Polymerzusammensetzung. In einer solchen Polymerzusammensetzung haben die Domänen der Kohlenwasserstoffphase eine Größe, die unterhalb der Wellenlänge des sichtbaren Lichts (390-780 nm) liegt.

### Haftklebmasse

Die vorliegende Erfindung betrifft ferner Haftklebmassen, umfassend die erfindungsgemäße Polymerzusammensetzung. Überraschend wurde gefunden, dass sich die Haftklebmassen besonders zur Verklebung von Substraten mit unpolaren Oberflächen eignen. Die Haftklebmassen der vorliegenden Erfindung sind dabei dennoch zur Verklebung polarer Oberflächen geeignet. Unter unpolaren Oberflächen werden Substrate mit einer niedrigen Oberflächenenergie bzw. niedrigen Oberflächenspannung verstanden, insbesondere mit einer Oberflächenspannung von kleiner als 45 mN/m, bevorzugt von kleiner als 40 mN/m und besonders bevorzugt von kleiner 35 mN/m. Zur Bestimmung der Oberflächenspannung wird der Kontaktwinkel nach DIN EN 828 gemessen.

Die erfindungsgemäße Haftklebmasse wird bevorzugt in Filmform bereitgestellt. Hierzu kann die Polymerzusammensetzung entweder als solche oder nach Zusatz von Klebharzen mittels geläufiger Beschichtungsverfahren aus Lösung zu einer Haftklebemasseschicht auf einem Trägermaterial (Folie, Schaum, syntaktischer Schaum, Gewebe, Papier) ausgeformt werden, wobei die Haftklebmasseschicht ein Flächengewicht von 40 bis 100 g/m2 aufweist.

Erfindungsgemäße Klebebänder können gestaltet sein als
- einschichtige, beidseitig selbstklebende Klebebänder - sogenannte "Transfertapes" - aus einer einzigen Schicht der erfindungsgemäßen Haftklebmasse bzw. der erfindungsgemäßen mehrphasigen Polymerzusammensetzung;
- einseitig selbstklebend ausgerüstete Klebebänder - nachfolgend "einseitige Selbstklebebänder" - bei denen die erfindungsgemäße Haftklebmasse bzw. die erfindungsgemäße mehrphasige Polymerzusammensetzung in einem mehrschichtigen Produkt bereitgestellt wird, zum Beispiel in Form von Zweischichtsystemen bestehend aus einer Schicht der erfindungsgemäßen Haftklebmasse bzw. der erfindungsgemäßen mehrphasigen Polymerzusammensetzung und einer geschäumten oder ungeschäumten Trägerschicht,
- mehrschichtige, beidseitig selbstklebend ausgerüstete Klebebänder mit zwei Haftklebmasseschichten - nachfolgend "doppelseitige Selbstklebebänder" - von denen wenigstens eine die erfindungsgemäße mehrphasige Polymerzusammensetzung umfasst;
- doppelseitige Klebebänder mit einer hitzeaktivierbaren Klebeschicht auf einer der Klebebandseiten und einer Schicht der erfindungsgemäßen Haftklebmasse bzw. der erfindungsgemäßen mehrphasigen Polymerzusammensetzung auf der anderen Klebebandseite. Hierzu können die beiden Schichten auf unterschiedlichen Seiten wenigstens eines geschäumten oder ungeschäumten Trägers oder auf unterschiedlichen Seiten eines mehrschichtigen Systems aufgetragen werden.

Dabei können die doppelseitigen Produkte, egal ob zur Verklebung oder zur Dichtung gedacht, einen symmetrischen oder einen asymmetrischen Produktaufbau aufweisen.

Das Klebeband ist für Transport, Lagerung oder Stanzprozesse vorzugsweise mindestens einseitig mit einem Liner versehen, also zum Beispiel mit einer silikonbeschichteten Folie oder einem Silikonpapier.

Im Folgenden wird die Erfindung anhand konkreter Beispiele näher erläutert.

### Experimenteller Teil

Die folgenden beispielhaften Experimente sollen die Erfindung näher erläutern, ohne dass durch die Wahl der angegebenen Beispiele die Erfindung unnötig eingeschränkt werden soll.

### Messmethoden (allgemein):

### Gelpermeationschromatographie GPC (Messmethode A1):

Die Angaben der zahlenmittleren und gewichtsmittleren Molekulargewichte Mₙ und M_{w} sowie der Polydispersität PD in dieser Schrift beziehen sich auf die Bestimmung per Gelpermeationschromatographie. Die Bestimmung erfolgt an 100 µL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, ID 8,0 mg - 50 mm verwendet. Zur Auftrennung werden die Säulen des Typs PSS-SDV, 5 µm, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung) im Falle der Kammpolymere und PS-Standards (Polystyrolkalibrierung) im Falle der Kohlenwasserstoffharze.

### Statische Glasübergangstemperatur Tg (Messmethode A2)

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

### Dynamisch_Mechanische Analyse (DMA) (Messmethode A3)

Der Test wird in einem schergeschwindigkeitskontrollierten Rheometer der Firma Ares unter Torsionsbelastung gefahren, wobei eine Platte-Platte-Geometrie mit einem Plattendurchmesser von 25 mm verwendet wird. Für die Temperatursweep-Messung beträgt die Messfrequenz 10 rad/s, der Temperaturbereich -40 °C bis 130 °C, die Aufheizrate 2,5°C/min und die Deformation 1 %.

### Feststoffgehalt (Messmethode A4):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### Messmethoden (insbesondere Haftklebemassen):

### 180° Klebkrafttest (Messmethode H1);

Die Bestimmung der Klebkraft Stahl erfolgt bei einem Prüfklima von 23 °C +/- 1 °C Temperatur und 50 % +/- 5 % rel. Luftfeuchte.

Ein 20 mm breiter Streifen einer auf Polyester als Schicht aufgetragenen Acrylathaftklebemasse wurde auf Stahlplatten aufgebracht, die zuvor zweimal mit Aceton sowie einmal mit Isopropanol gewaschen wurden und danach 5 Minuten an der Luft liegen gelassen, damit das Lösungsmittel abdampfen kann. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.

Die Messergebnisse sind in N/cm angegeben und sind gemittelt aus drei Messungen. Analog wurde die Klebkraft auf Polyethylen (PE) und Lack bestimmt. Als Lack wurde jeweils der Lack Uregloss® Colorless (Produkt-Nr. FF79-0060 0900) der Fa. BASF verwendet.

### Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C +/- 1 °C, 55 % +/- 5 % Luftfeuchtigkeit) und bei 70 °C in einem Wärmeschrank durchgeführt, wobei für diese Messung die Probe mit einem Gewicht von 0,5 kg belastet wurde.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

**Kommerziell erhältliche, eingesetzte Chemikalien,**

| *Chemische Verbindung* | *Handelsname* | *Hersteller* | *CAS-Nr.* |
|---|---|---|---|
| 1,3-Butadien, Homopolymer, hydriert, hydroxy-terminiert, Monomethacrylat | L-1253 | Kuraray | 260057-97-4 |
| 2,2'-Azobis(2-methylbutyronitril) | Vazo® 67 | DuPont | 13472-08-7 |
| Bis-(4-*tert-*butylcyclohexyl)peroxydicarbonat | Perkadox® 16 | Akzo Nobel | 15520-11-3 |
| Kohlenwasserstoffharz (auf C₅-Basis, geringer Aromatenanteil, Erweichungspunkt (Ring & Ball) 94°C) | Piccotac® 1095-N | Eastman | - |
| Kohlenwasserstoffharz (hydriert, Erweichungspunkt (Ring & Ball) 88°C) | Reagalite® R1090 | Eastman | - |
| flüssiges Kohlenwasserstoffharz (C₅-Basis) | Wingtack® 10 | Cray Valley | 26813-14-9 |
| Terpenphenolharz (Erweichungspunkt 110 °C; M_{w} = 500 - 800 g/mol; D = 1,50) | Dertophene® T110 | DRT resins | 25359-84-6 |
| Aluminium acetylacetonat | - | Sigma-Aldrich | 13963-57-0 |
| *N*,*N*,*N'*,*N'*-Tetrakis(2,3-epoxypropyl)m-xylol-a,a'-diamin | Erisys™ GA-240 | CVC Speciality Chemicals Inc. | 63738-22-7 |

### Herstellung der Kammcopolymere (A) - P 1 bis P 6 und Vergleichsbeispiel P 7

Im Folgenden wird die Präparation beispielhafter Kammcopolymere (A) beschrieben.

### Beispiel P 1:

Ein für radikalische Polymerisationen konventioneller 100 L-Glasreaktor wurde mit 1,2 kg Acrylsäure (AS, 3 %), 20,97 kg Butylacrylat (BA, 52,43 %), 9,83 kg 2-Ethylhexylacrylat (EHA, 24,57 %), 4,0 kg Isobornylacrylat (IBOA, 10 %), 4,0 kg Makromer L-1253 (10 %) und 20,8 kg Aceton/ Benzin 60/95 (1:1) befüllt. Nach 45minütiger Durchleitung von Stickstoffgas unter Rühren wurde der Reaktor auf 58 °C hochgeheizt und 0,8 kg Vazo® 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,8 kg Vazo® 67 hinzugegeben. Über einen Zeitraum von 5 h (gerechnet ab der letzten Zugabe von Vazo®67) wurde jeweils stündlich je nach Viskositätsanstieg mit jeweils 5,0 bis 10,0 kg Benzin 60/95 verdünnt, so dass eine ausreichende Durchmischung gewährleistet war. Zur Reduktion der Restmonomere wurden nach 6 und nach 7 h nach Reaktionsstart jeweils 1,5 kg Bis-(4-*tert*-butylcyclohexyl)peroxydicarbonat hinzugegeben und zwischendurch noch mit 15 kg Benzin 60/95 verdünnt. Die Reaktion wurde nach 24 h Reaktionszeit durch Abkühlen auf Raumtemperatur abgebrochen.

### Kamms (A) - P 2 bis P 6 und Vergleichsbeispiel P 7

Die Herstellung der Kammcopolymere P 2 bis P 6 und des Vergleichsbeispiels VP 7 erfolgte analog dem Beispiel P 1. Die prozentualen Massenangaben der jeweils verwendeten Monomere sind in Tabelle 1 aufgeführt.

**Tabelle 1: Hybridpolymere P 2 bis P 6 und Vergleichsbeispiele VP 7**

| | **2** | **3** | **4** | **5** | **6** | **Vergleichsbeispiel VP 7** |
|---|---|---|---|---|---|---|
| AS | 3,0 % | 3,0 % | 3 % | 5,0 % | 7 % | 8 % |
| BA | 60,1 % | 56,6 % | 49 % | 54,5 % | 53 % | 52 % |
| EHA | 26,9 % | 25,4 % | 23 % | 25,5 % | 25 % | 25 % |
| IBOA | - | - | 15 % | - | - | - |
| L-1253 | 10,0 % | 15,0 % | 10 % | 15,0 % | 15 % | 15 % |

In Tabelle 2 sind jeweils die mittels GPC gemessenen Molmassenverteilungen und mittels DSC gemessenen statischen Glasübergangstemperaturen der Kammcopolymere P 1 bis P 6 und des Vergleichsbeispiels VP 7 dargestellt.

**Tabelle 2: Polymerdaten Polymere P 1 bis P 6 sowie Vergleichsbeispiel VP 7**

| | Mₙ [g/mol]^{b)} | M_{w} [g/mol]^{b)} | PD [-]^{b)} | stat. Tg [°C]^{c)} |
|---|---|---|---|---|
| **P 1** | 63.800 | 1.640.000 | 25,71 | -37 |
| **P 2** | 63.900 | 1.650.000 | 25,85 | -48 |
| **P 3** | 58.700 | 1.670.000 | 28,44 | -48 |
| **P 4** | 64.100 | 1.620.000 | 25,27 | -33 |
| **P 5** | 78.800 | 1.690.000 | 21,48 | -34 |
| **P 6** | 68.700 | 1.590.000 | 23,14 | -28 |
| **VP7** | 62.100 | 1.550.000 | 24,96 | -27 |

| | | | | |
|---|---|---|---|---|
| ^{b)} Gemessen nach Messmethode A1. ^{c)} Gemessen nach Messmethode A2. Die Glasübergangstemperatur der Kohlenwasserstoff-Phase der Kammcopolymere konnte nicht ermittelt werden, da diese unterhalb der Starttemperatur der Messung von -50°C liegt. | | | | |

### II Herstellung mehrphasiger Polymerzusammensetzungen PSA 1 bis PSA 10 sowie der Vergleichsbeispiele V 11 bis V 12

Es wurden mehrphasige Polymerzusammensetzungen PSA 1 bis PSA 10 sowie V11 bis V 12 aus den Kammcopolymeren P 1 bis P6 hergestellt. Das Polymer VP7 wurde zur Herstellung der Polymerzusammensetzung V13 verwendet. Dazu wurde das oben erhaltene Kammcopolymer PSA1 bis PSA10 bzw. VP7 jeweils auf einen Feststoffgehalt von 30 % mit Benzin verdünnt. Anschließend wurden der in Tabelle 3 genannte Vernetzer (entweder 0,3 Gew.-% Aluminium acetylacetonat (Aluminiumchelat) (A) oder 0,075 Gew.-% Erisys GA240 (B)) und das bzw. die in Tabelle 3 genannte(n) Harz(e) zu der Lösung hinzugegeben. Anschließend wurde und auf eine 36 µm dicke PET-Folie (Kemafoil HPH 100, Fa. Covema) beschichtet und anschließend getrocknet (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug jeweils 50 g/m².

**Tabelle 3: Hybridhaftklebemassebeispiele PSA 1 bis PSA 10 sowie Vergleichsbeispiele V 11 bis V 16**

| | Polymer | Vernetzer^{d)} | Regalite R1090 [%] | Piccotac 1095-N [%] | Wingtack 10 [%] | Harzanteil gesamt [%] | Harzanteil auf Makromer [%] | Anteil Festharz auf Gesamtharz [%] |
|---|---|---|---|---|---|---|---|---|
| **PSA 1** | P 1 | A | 24,2 | - | 16,2 | 40,4 | 83,3 | 60,0 |
| **PSA 2** | P 2 | A | 23,1 | - | 23,1 | 46,2 | 85,7 | 50,0 |
| **PSA 3** | P 2 | A | 25,8 | - | 22,8 | 48,6 | 86,5 | 53,1 |
| **PSA 4** | P 3 | A | 25,8 | - | 22,8 | 48,6 | 81,0 | 53,1 |
| **PSA 5** | P 4 | A | 24,4 | - | 24,4 | 48,8 | 86,5 | 50 |
| **PSA 6** | P 5 | A | - | 29,4 | 24,3 | 53,7 | 83,0 | 54,8 |
| **PSA 7** | P 5 | A | - | 28,2 | 23,8 | 52,0 | 82,4 | 54,3 |
| **PSA 8** | P 5 | A | - | 27,1 | 22,7 | 49,8 | 81,5 | 54,5 |
| **PSA 9** | P 5 | B | - | 27,1 | 22,7 | 49,8 | 81,5 | 54,5 |
| **PSA 10** | P 6 | A | - | 27,1 | 22,7 | 49,8 | 81,5 | 54,5 |
| **V 11** | P 1 | A | 30,0 | - | - | 30,0 | 75,0 | 100,0 |
| **V 12** | P 3 | B | 21,1 | - | 14,0 | 35,1 | 72,7 | 60,0 |
| **V 13** | VP 7 | A | - | 24,0 | 16,0 | 40,0 | 63,4 | 60,0 |

| | | | | | | | | |
|---|---|---|---|---|---|---|---|---|
| ^{d)} Vernetzer A: 0,3 Gew.-% Aluminiumchelat, Vernetzer B: 0,075 Gew.-% Erisys GA240. | | | | | | | | |

Alle klebtechnischen Daten der Beispiele PSA 1 bis PSA 10 sowie der Vergleichsbeispiele sind in der Tabelle 4 aufgeführt.

**Tabelle 4: Klebtechnische Daten der mehrphasigen Polymerzusammensetzungen PSA 1 bis PSA 10 sowie der Vergleichsbeispiele V 11 bis V 14**

| **Bsp.** | KK sofort Stahl [N/cm] | KK sofort FF-79 [N/cm] | KK sofort PE [N/cm] | SSZ RT [min] |
|---|---|---|---|---|
| **PSA 1** | 9,54 | 8,28 | 4,62 | 10.000 |
| **PSA 2** | 11,97 | 8,89 | 6,98 | 10.000 |
| **PSA 3** | 12,79 | 10,52 | 7,02 | 10.000 |
| **PSA 4** | 10,40 | 9,14 | 6,16 | 10.000 |
| **PSA 5** | 12,71 | 9,12 | 2,94 | 10.000 |
| **PSA 6** | 14,54 | 14,02 | 6,55 | 5905 (K) |
| **PSA 7** | 15,12 | 14,94 | 8,6 | 7464 (K) |
| **PSA 8** | 15,74 | 15,39 | 7,56 | 7108 (K) |
| **PSA 9** | 14,12 | 13,38 | 7,22 | 10.000 |
| **PSA 10** | 7,68 | 7,88 | 4,01 | 10.000 |
| **V 11** | 7,18 | 3,84 | 2,60 | 3682 (A) |
| **V 12** | 8,40 | 4,02 | 3,18 | 7246 (A) |
| **V 13** | 7,02 | 4,13 (R) | 1,23 (R) | 10.000 |

Die Messungen Klebkraft (KK) sofort erfolgten gemäß Messmethode H1, die Messungen der Scherstandszeiten (SSZ) bei Raumtemperatur erfolgte gemäß Messmethode H2. A: Adhäsionsbruch, K: Kohäsionsbruch, R: Rattern (slip stick failure).

Die Vergleichsbeispiele V 11 bis V 12 veranschaulichen die Kombination der Kammcopolymere (A) mit einer unvorteilhaften Menge der Kohlenwasserstoffverbindungen (B-1) und (B-2). Die Verwendung von Hybridpolymeren mit einer zu hohen Acrylsäurekonzentration führt zu einer drastischen Absenkung der Klebkräfte auf den getesteten unpolaren Oberflächen PE und dem Lack FF-79 (V 13).

## Patentansprüche

1. Mehrphasige Polymerzusammensetzung, umfassend
- 30-64 Gewichtsteile eines Kammcopolymers (A), das erhältlich ist durch Polymerisation eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet; und
- 36-70 Gewichtsteile wenigstens zweier in der Kohlenwasserstoffphase Kw des Kammcopolymers (A) löslicher Kohlenwasserstoffverbindungen (B-1) und (B-2);
wobei das Comonomerengemisch umfasst: 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode, von mehr als 40 °C aufweisen; und 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus Monomeren, deren Homopolymere eine statische Glasübergangstemperatur (Tg), gemessen nach der DSC Methode, von 40 °C oder weniger aufweisen; und
wobei die wenigstens zwei Kohlenwasserstoffverbindungen ein Kohlenwasserstoffharz (B-1) mit einem Erweichungspunkt von mindestens 70°C und ein Kohlenwasserstoffharz (B-2) mit einem Erweichungspunkt von höchstens 20°C umfassen.

2. Polymerzusammensetzung gemäß Anspruch 1, **dadurch**
**gekennzeichnet, dass** das Kammcopolymer (A) durch Polymerisation aus einer Mischung umfassend 50-99 Gewichtsprozent des Comonomerengemisches sowie 1-50 Gewichtsprozent des Makromers, bezogen auf das Gesamtgewicht des Comonomerengemisches und des wenigstens einen Makromers, erhältlich ist.

3. Polymerzusammensetzung gemäß einem der vorhergehenden Ansprüche, **dadurch gekennzeichnet, dass** das Comonomergemisch 2-7 Gewichtsprozent, bezogen auf das Gesamtgewicht des Comonomerengemisches und des wenigstens einen Makromers, wenigstens eines Comonomers enthält, das ausgewählt ist aus der Gruppe bestehend aus Acrylsäure, Methacrylsäure, Itaconsäure, Itaconsäureanhydrid, Maleinsäure und Maleinsäureanhydrid; und 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus
(Meth-)Acrylatcomonomeren mit einem C1-C18 Alkylrest in der Estergruppe.

4. Polymerzusammensetzung gemäß einem der vorhergehenden Ansprüche, **dadurch gekennzeichnet, dass** das Comonomergemisch 2-7 Gewichtsprozent Acrylsäure, bezogen auf das Gesamtgewicht des Comonomerengemisches und des wenigstens einen Makromers, umfasst.

5. Polymerzusammensetzung gemäß einem der vorhergehenden
Ansprüche, **dadurch gekennzeichnet, dass** das Comonomergemisch zusätzlich bis zu 20 Gewichtsprozent wenigstens eines weiteren copolymerisierbaren Monomers enthält, ausgewählt aus der Gruppe bestehend aus Isobornylacrylat, Stearylacrylat, Isostearylacrylat, Hydroxyethylacrylat, Hydroxyethylmethacrylat, 4-Hydroxybutylacrylat, Vinylacetat, Vinylbutyrat, Vinylpropionat, Vinylisobutyrat, Vinylvalerat, Vinylversatat, N-Vinylpyrollidon und N-Vinylcaprolactam.

6. Polymerzusammensetzung gemäß einem der vorhergehenden
Ansprüche, **dadurch gekennzeichnet, dass** die Polymerisation des Comonomerengemisches in Gegenwart wenigstens eines weiteren, nicht-polyolefinischen Makromers durchgeführt wird.

7. Polymerzusammensetzung gemäß einem der vorhergehenden
Ansprüche, **dadurch gekennzeichnet, dass** das Gewichtsverhältnis der Kohlenwasserstoffharze (B-1) und (B-2), (B-1):(B-2), 41:59 bis 70:30 beträgt.

8. Polymerzusammensetzung gemäß einem der vorhergehenden
Ansprüche, **dadurch gekennzeichnet, dass** die Kohlenwasserstoffharze (B-1) und (B-2) jeweils ein zahlenmittleres Molekulargewicht (Mn) von 1.000 g/mol oder weniger, bestimmt mittels GPC-Methode, aufweisen.

9. Polymerzusammensetzung gemäß einem der vorhergehenden
Ansprüche, **dadurch gekennzeichnet, dass** die Polymerzusammensetzung zusätzlich eine Kohlenwasserstoffverbindung (C) enthält, deren zahlenmittleres Molekulargewicht (Mn) mehr als 1.000 g/mol, bestimmt mittels GPC-Methode, beträgt.

10. Polymerzusammensetzung gemäß einem der vorhergehenden
Ansprüche, **dadurch gekennzeichnet, dass** die Polymerzusammensetzung wenigstens ein Additiv, ausgewählt aus der Gruppe bestehend aus Weichmachern, Ölen und in der Acrylatphase des Kammcopolymers löslichen Harzen, enthält.

11. Polymerzusammensetzung gemäß einem der vorhergehenden Ansprüche, **dadurch gekennzeichnet, dass** das Comonomerengemisch kein Hydroxyalkyl(meth)acrylat enthält.

12. Verfahren zum Herstellen einer mehrphasigen
Polymerzusammensetzung gemäß einem der vorhergehenden Ansprüche, umfassend die Schritte
- Polymerisieren eines Comonomerengemisches in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer AcrylatHauptkette und Kohlenwasserstoff-Seitenketten, wobei das Comonomerengemisch umfasst:
▪ 2-7 Gewichtsprozent, bezogen auf das Gesamtgewicht des Comonomerengemisches und des wenigstens einen Makromers, wenigstens eines Comonomers, das ausgewählt ist aus der Gruppe bestehend aus Acrylsäure, Methacrylsäure, Itaconsäure, Itaconsäureanhydrid, Maleinsäure, Maleinsäureanhydrid und weiteren Monomeren, deren Homopolymere eine statische Glasübergangstemperatur (Tg), gemessen nach der DSC Methode, von mehr als 40 °C aufweisen; und
▪ 43-97 Gewichtsprozent, bezogen auf das Gesamtgewicht des Comonomerengemisches und des wenigstens einen Makromers, wenigstens zweier (Meth-)Acrylatcomonomere, die ausgewählt sind aus der Gruppe bestehend aus Monomeren, deren Homopolymere eine statische Glasübergangstemperatur (Tg), gemessen nach der DSC Methode, von 40 °C oder weniger aufweisen;
- Mischen von 30-64 Gewichtsteilen des so erhaltenen Kammcopolymers (A) mit 36-70 Gewichtsteilen, bezogen auf 100 Gewichtsteile der Polymerzusammensetzung, wenigstens zweier Kohlenwasserstoffverbindungen (B-1) und (B-2), die mit den Kohlenwasserstoffseitenketten des Kammcopolymers (A) kompatibel sind, wobei(B-1) ein Kohlenwasserstoffharz mit einem Erweichungspunkt von mindestens 70°C und (B-2) ein Kohlenwasserstoffharz mit einem Erweichungspunkt von höchstens 20°C ist.

13. Haftklebmasse, umfassend eine mehrphasige
Polymerzusammensetzung gemäß einem der Ansprüche 1-11.

14. Verwendung einer Haftklebmasse gemäß Anspruch 13
zur Verklebung von Gegenständen.

## Claims

1. Multiphase polymer composition comprising
- 30-64 parts by weight of a comb-type graft copolymer (A) which is obtainable by polymerizing a comonomer mixture in the presence of at least one macromer selected from the group consisting of polymerizable ethylene-butylene, ethylene-propylene, ethylene-butylene-propylene and isobutylene macromers, and which forms a continuous acrylate phase and a discontinuous hydrocarbon phase Kw; and
- 36-70 parts by weight of at least two hydrocarbon compounds (B-1) and (B-2) soluble in said hydrocarbon phase Kw of said comb-type graft copolymer (A);
wherein the comonomer mixture comprises: 2-7 weight percent, based on the combined weight of the comonomer mixture and of the at least one macromer, of at least one comonomer selected from the group consisting of acrylic acid, methacrylic acid, itaconic acid, itaconic anhydride, maleic acid, maleic anhydride and further monomers whose homopolymers have a static glass transition temperature (Tg), as measured by the DSC method, of more than 40°C; and 43-97 weight percent, based on the combined weight of the comonomer mixture and of the at least one macromer, of at least two (meth)acrylate comonomers selected from the group consisting of monomers whose homopolymers have a static glass transition temperature (Tg), as measured by the DSC method of 40°C or less; and
wherein the at least two hydrocarbon compounds comprise a hydrocarbon resin (B-1) having a softening point of at least 70°C and a hydrocarbon resin (B-2) having a softening point of at most 20°C.

2. Polymer composition according to Claim 1, **characterized in that** said comb-type graft copolymer (A) is obtainable via polymerization from a mixture comprising 50-99 weight percent of the comonomer mixture and also 1-50 weight percent of the macromer, based on the combined weight of the comonomer mixture and of the at least one macromer.

3. Polymer composition according to either preceding claim, **characterized in that** the comonomer mixture contains 2-7 weight percent, based on the combined weight of the comonomer mixture and of the at least one macromer, of at least one comonomer selected from the group consisting of acrylic acid, methacrylic acid, itaconic acid, itaconic anhydride, maleic acid, and maleic anhydride; and 43-97 weight percent, based on the combined weight of the comonomer mixture and of the at least one macromer, of at least two (meth)acrylate comonomers selected from the group consisting of (meth)acrylate comonomers having a C1-C18 alkyl moiety in the ester group.

4. Polymer composition according to any preceding claim, **characterized in that** the comonomer mixture comprises 2-7 weight percent of acrylic acid, based on the combined weight of the comonomer mixture and of the at least one macromer.

5. Polymer composition according to any preceding claim, **characterized in that** the comonomer mixture additionally comprises up to 20 weight percent of at least one further copolymerizable monomer selected from the group consisting of isobornyl acrylate, stearyl acrylate, isostearyl acrylate, hydroxyethyl acrylate, hydroxyethyl methacrylate, 4-hydroxybutyl acrylate, vinyl acetate, vinyl butyrate, vinyl propionate, vinyl isobutyrate, vinyl valerate, vinyl versatate, N-vinylpyrollidone and N-vinylcaprolactam.

6. Polymer composition according to any preceding claim, **characterized in that** the polymerization of the comonomer mixture is carried out in the presence of at least one further, non-polyolefinic macromer.

7. Polymer composition according to any preceding claim, **characterized in that** the weight ratio of the hydrocarbon resins (B-1) and (B-2), (B-1):(B-2), is 41:59 to 70:30.

8. Polymer composition according to any preceding claim, **characterized in that** said hydrocarbon resins (B-1) and (B-2) each have a number average molecular weight (Mn) of 1000 g/mol or less, as determined by the GPC method.

9. Polymer composition according to any preceding claim, **characterized in that** Polymer composition additionally contains a hydrocarbon compound (C) whose number average molecular weight (Mn) is more than 1000 g/mol, as determined by the GPC method.

10. Polymer composition according to any preceding claim, **characterized in that** Polymer composition comprises at least one additive selected from the group consisting of plasticizers, of oils and of resins soluble in the acrylate phase of the comb-type graft copolymer.

11. Polymer composition according to any preceding claim, **characterized in that** the comonomer mixture contains no hydroxyalkyl (meth)acrylate.

12. Method of preparing a multiphase polymer composition according to any preceding claim, said method comprising the steps of
- polymerizing a comonomer mixture in the presence of at least one macromer selected from the group consisting of polymerizable ethylene-butylene, ethylene-propylene, ethylene-butylene-propylene and isobutylene macromers to form a comb-type graft copolymer (A) having an acrylate main chain and hydrocarbon side chains, wherein the comonomer mixture comprises:
▪ 2-7 weight percent, based on the combined weight of the comonomer mixture and of the at least one macromer, of at least one comonomer selected from the group consisting of acrylic acid, methacrylic acid, itaconic acid, itaconic anhydride, maleic acid, maleic anhydride and further monomers whose homopolymers have a static glass transition temperature (Tg), as measured by the DSC method, of more than 40°C; and
▪ 43-97 weight percent, based on the combined weight of the comonomer mixture and of the at least one macromer, of at least two (meth)acrylate comonomers selected from the group consisting of monomers whose homopolymers have a static glass transition temperature (Tg), as measured by the DSC method of 40°C or less;
- mixing 30-64 parts by weight of said comb-type graft copolymer (A) thus obtained with 36-70 parts by weight, based on 100 parts by weight of Polymer composition, of at least two hydrocarbon compounds (B-1 and (B-2) which are compatible with the hydrocarbon side chains of said comb-type graft copolymer (A), wherein (B-1) is a hydrocarbon resin having a softening point of at least 70°C and (B-2) is a hydrocarbon resin having a softening point of at most 20°C.

13. Pressure-sensitive adhesive comprising a multiphase polymer composition according to any of Claims 1 to 11.

14. Use of a pressure-sensitive adhesive according to Claim 13 to bond articles.

## Revendications

1. Composition polymère polyphasée, comprenant :
- 30 à 64 parties en poids d'un copolymère en peigne (A), qui peut être obtenu par polymérisation d'un mélange de comonomères en présence d'au moins un macromère choisi dans le groupe constitué par les macromères d'éthylène-butylène, d'éthylène-propylène, d'éthylène-butylène-propylène et d'isobutylène polymérisables, et qui forme une phase acrylate continue et une phase hydrocarbonée discontinue Kw ; et
- 36 à 70 parties en poids d'au moins deux composés hydrocarbonés (B-1) et (B-2) solubles dans la phase hydrocarbonée Kw du copolymère en peigne (A) ;
le mélange de comonomères comprenant : 2 à 7 pour cent en poids, par rapport au poids total du mélange de comonomères et dudit au moins un macromère, d'au moins un comonomère, qui est choisi dans le groupe constitué par l'acide acrylique, l'acide méthacrylique, l'acide itaconique, l'anhydride de l'acide itaconique, l'acide maléique, l'anhydride de l'acide maléique et d'autres monomères dont les homopolymères présentent une température de transition vitreuse statique (Tg), mesurée selon la méthode DSC, de plus de 40 °C ; et 43 à 97 pour cent en poids, par rapport au poids total du mélange de comonomères et dudit au moins un macromère, d'au moins deux comonomères de (méth)acrylate, qui sont choisis dans le groupe constitué par les monomères dont les homopolymères présentent une température de transition vitreuse statique (Tg), mesurée selon la méthode DSC, de 40 °C ou moins ; et
lesdits au moins deux composés hydrocarbonés comprenant une résine hydrocarbonée (B-1) ayant un point de ramollissement d'au moins 70 °C et une résine hydrocarbonée (B-2) ayant un point de ramollissement d'au plus 20 °C.

2. Composition polymère selon la revendication 1, **caractérisée en ce que** le copolymère en peigne (A) peut être obtenu par polymérisation à partir d'un mélange comprenant 50 à 99 pour cent en poids du mélange de comonomères, ainsi que 1 à 50 pour cent en poids du macromère, par rapport au poids total du mélange de comonomères et dudit au moins un macromère.

3. Composition polymère selon l'une quelconque des revendications précédentes, **caractérisée en ce que** le mélange de comonomères contient 2 à 7 pour cent en poids, par rapport au poids total du mélange de comonomère et dudit au moins un macromère, d'au moins un comonomère, qui est choisi dans le groupe constitué par l'acide acrylique, l'acide méthacrylique, l'acide itaconique, l'anhydride de l'acide itaconique, l'acide maléique et l'anhydride de l'acide maléique ; et 43 à 97 pour cent en poids, par rapport au poids total du mélange de comonomères et dudit au moins un macromère, d'au moins deux comonomères de (méth)acrylate, qui sont choisis dans le groupe constitué par les comonomères de (méth)acrylate contenant un radical alkyle en C1-C18 dans le groupe ester.

4. Composition polymère selon l'une quelconque des revendications précédentes, **caractérisée en ce que** le mélange de comonomères contient 2 à 7 pour cent en poids d'acide acrylique, par rapport au poids total du mélange de comonomère et dudit au moins un macromère.

5. Composition polymère selon l'une quelconque des revendications précédentes, **caractérisée en ce que** le mélange de comonomères contient en outre jusqu'à 20 pour cent en poids d'au moins un autre monomère copolymérisable, choisi dans le groupe constitué par l'acrylate d'isobornyle, l'acrylate de stéaryle, l'acrylate d'isostéaryle, l'acrylate d'hydroxyéthyle, le méthacrylate d'hydroxyéthyle l'acrylate de 4-hydroxybutyle, l'acétate de vinyle, le butyrate de vinyle, le propionate de vinyle, l'isobutyrate de vinyle, le valérate de vinyle, le versatate de vinyle, la N-vinylpyrolidone et le N-vinylcaprolactame.

6. Composition polymère selon l'une quelconque des revendications précédentes, **caractérisée en ce que** la polymérisation du mélange de comonomères est réalisée en présence d'au moins un autre macromère non polyoléfinique.

7. Composition polymère selon l'une quelconque des revendications précédentes, **caractérisée en ce que** le rapport en poids entre les résines hydrocarbonées (B-1) et (B-2), (B-1):(B-2), est de 41:59 à 70:30.

8. Composition polymère selon l'une quelconque des revendications précédentes, **caractérisée en ce que** les résines hydrocarbonées (B-1) et (B-2) présentent chacune un poids moléculaire moyen en nombre (Mn) de 1 000 g/mol ou moins, déterminé par la méthode CPG.

9. Composition polymère selon l'une quelconque des revendications précédentes, **caractérisée en ce que** la composition polymère contient en outre un composé hydrocarboné (C), dont le poids moléculaire moyen en nombre (Mn) est de plus de 1 000 g/mol, déterminé par la méthode CPG.

10. Composition polymère selon l'une quelconque des revendications précédentes, **caractérisée en ce que** la composition polymère contient au moins un additif, choisi dans le groupe constitué par les plastifiants, les huiles et les résines solubles dans la phase acrylate du copolymère en peigne.

11. Composition polymère selon l'une quelconque des revendications précédentes, **caractérisée en ce que** le mélange de comonomères ne contient pas de (méth)acrylate d'hydroxyalkyle.

12. Procédé de fabrication d'une composition polymère polyphasée selon l'une quelconque des revendications précédentes, comprenant les étapes suivantes :
- la polymérisation d'un mélange de comonomères en présence d'au moins un macromère, choisi dans le groupe constitué par les macromères d'éthylène-butylène, d'éthylène-propylène, d'éthylène-butylène-propylène et d'isobutylène polymérisables, avec formation d'un copolymère en peigne (A) ayant une chaîne principale acrylate et des chaînes latérales hydrocarbonées, le mélange de comonomères comprenant :
- 2 à 7 pour cent en poids, par rapport au poids total du mélange de comonomères et dudit au moins un macromère, d'au moins un comonomère, qui est choisi dans le groupe constitué par l'acide acrylique, l'acide méthacrylique, l'acide itaconique, l'anhydride de l'acide itaconique, l'acide maléique, l'anhydride de l'acide maléique et d'autres monomères dont les homopolymères présentent une température de transition vitreuse statique (Tg), mesurée selon la méthode DSC, de plus de 40 °C ; et
- 43 à 97 pour cent en poids, par rapport au poids total du mélange de comonomères et dudit au moins un macromère, d'au moins deux comonomères de (méth)acrylate, qui sont choisis dans le groupe constitué par les monomères dont les homopolymères présentent une température de transition vitreuse statique (Tg), mesurée selon la méthode DSC, de 40 °C ou moins ;
- le mélange de 30 à 64 parties en poids du copolymère en peigne (A) ainsi obtenu avec 36 à 70 parties en poids, par rapport à 100 parties en poids de la composition polymère, d'au moins deux composés hydrocarbonés (B-1) et (B-2), qui sont compatibles avec les chaînes latérales hydrocarbonées du copolymère en peigne (A), (B-1) étant un résine hydrocarbonée qui a un point de ramollissement d'au moins 70 °C et (B-2) étant une résine hydrocarbonée qui a un point de ramollissement d'au plus 20 °C.

13. Masse adhésive de contact, comprenant une composition polymère polyphasée selon l'une quelconque des revendications 1 à 11.

14. Utilisation d'une masse adhésive de contact selon la revendication 13 pour le collage d'objets.
